# FASCICULE DE BREVET EUROPEEN

(11) **EP 2 655 424 B1**
(45) Date de publication et mention de la délivrance du brevet: **26.08.2015**
(21) Numéro de dépôt: 11796691.1
(22) Date de dépôt: 13.12.2011
(51) Int. Cl.: C08L 9/00, C08L 25/00, C08K 3/00, C08K 5/54, B60C 1/00, C08L 9/06, C08L 25/04, C08K 3/36, C08K 5/548, C08F 8/42, C08F 112/08

(54) **COMPOSITION DE CAOUTCHOUC COMPRENANT UN POLYMERE THERMOPLASTIQUE FONCTIONNALISE**
KAUTSCHUKTZSAMMENSETZUNG MIT EINEM FUNKTIONALISIERTEN THERMOPLASTISCHEN POLYMER
RUBBER COMPOSITION INCLUDING A FUNCTIONALIZED THERMOPLASTIC POLYMER

(30) Priorité: 20.12.2010 FR 1060813
(43) Date de publication de la demande: 30.10.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: SIMON, Nathalie, F-63040 Clermont-Ferrand Cedex 9 (FR); DE LANDTSHEER, Stéphanie, F-63040 Clermont-Ferrand Cedex 9 (FR)
(74) Mandataire: Le Cam, Véronique Marie Christine
(86) Numéro de dépôt international: PCT/EP2011/072546
(87) Numéro de publication internationale: WO 2012/084599

(56) Documents cités:
- EP-A1- 0 767 206
- WO-A1-01/92402
- JP-A- 2010 209 256
- DATABASE WPI Week 201072 Thomson Scientific, London, GB; AN 2010-N08529 XP002640386, & WO 2010/116988 A1 (SUMITOMO RUBBER IND LTD) 14 octobre 2010 (2010-10-14)
- SUZUKI K ET AL: "SYNTHESIS AND CONDENSATION OF 3-(TRIETHOXYSILYL)PROPYL-TERMINATED POLYSTYRENE", POLYMER JOURNAL, SOCIETY OF POLYMER SCIENCE, TOKYO, JP, vol. 35, no. 12, 15 décembre 2003 (2003-12-15), pages 938-944, XP001200123, ISSN: 0032-3896, DOI: DOI:10.1295/POLYMJ.35.938

## Description

La présente invention est relative aux bandes de roulement des pneumatiques et aux compositions de caoutchouc utilisées pour la fabrication de telles bandes de roulement.
Elle se rapporte plus particulièrement aux bandes de roulement des pneumatiques renforcées de charges inorganiques renforçantes telles que siliceuses ou alumineuses, ces bandes de roulement étant destinées en particulier à des pneumatiques équipant des véhicules automobiles.

Idéalement, une bande de roulement de pneumatique doit obéir à un grand nombre d'exigences techniques, souvent antinomiques, parmi lesquelles une résistance élevée à l'usure, une faible résistance au roulement, une adhérence élevée tant sur sol sec que sur sol mouillé, enneigé ou verglacé, tout en offrant au pneumatique un très bon niveau de comportement routier ("*handling*") sur véhicule automobile, en particulier une poussée de dérive ("*drift thrust*" ou "*cornering*") élevée.

Pour améliorer le comportement routier, on le sait, une rigidité supérieure de la bande de roulement est souhaitable, cette rigidification de la bande de roulement pouvant être obtenue par exemple en augmentant le taux de charge renforçante ou en incorporant certaines résines renforçantes dans les compositions de caoutchouc constitutives de ces bandes de roulement.

Toutefois, une telle rigidification de la bande de roulement, tout au moins pour sa partie superficielle qui est au contact du sol lors du roulage du pneumatique, pénalise de manière connue, le plus souvent de manière rédhibitoire, les propriétés d'adhérence.

Pour satisfaire à ces deux exigences contradictoires que sont le comportement routier et l'adhérence, une solution consiste à créer un gradient de rigidité par un phénomène d'accommodation de la composition de caoutchouc de la bande de roulement comme cela est décrit dans la demande de brevet WO 02/10269. Ce phénomène d'accommodation se traduit par l'aptitude de la composition de caoutchouc à devenir moins rigide en surface de la bande de roulement sous l'effet des déformations subies par la bande de roulement au cours du roulage du pneumatique. Cette diminution de la rigidité à la surface de la bande de roulement, ne se produit pas ou très peu à l'intérieur de la bande de roulement qui conserve ainsi un niveau de rigidité plus élevé que la surface de la bande de roulement. Ce gradient de rigidité de la composition de caoutchouc a l'avantage d'être pérenne, puisque le phénomène d'accommodation se produit tout au long de la durée de vie du pneumatique au cours du roulage.

Au vu de ce qui précède, il est un objectif constant de fournir des compositions de caoutchouc pour bande de roulement de pneumatique qui satisfont un compromis de performance entre adhérence et comportement routier.

Cet objectif est atteint en ce que les Inventeurs ont découvert que l'utilisation de certains polymères thermoplastiques comme charge non renforçante dans une composition de caoutchouc renforcée par une charge inorganique conférait à la composition de caoutchouc, de façon inattendue, un gradient de rigidité et permettait ainsi d'améliorer le compromis de performances que sont le comportement routier et l'adhérence, notamment sur sol mouillé, d'un pneumatique dont la bande de roulement est à base d'une telle composition.

L'utilisation de polymères thermoplastiques est bien connue dans les compositions de caoutchouc comme le démontre la publication de nombreux documents relatifs à ce sujet comme par exemple les demandes de brevet EP 0 867 471 A1, EP 1 008 464 A1 ou US 2002/0019484. Plus particulièrement les polymères thermoplastiques polyvinylaromatiques de masse molaire moyenne en masse comprise entre 2000 g/mol et 50000 g/mol sont connus pour être utilisés dans des compositions de caoutchouc pour bande de roulement afin d'augmenter l'hystérèse des compositions de caoutchouc les comprenant sans pénaliser leur propriété de rupture. De telles compositions de caoutchouc sont décrites dans les demandes de brevet EP 1 748 052 A1 et JP 2006-274045 qui mettent en évidence effectivement une augmentation de l'hystérèse sans dégrader la force rupture.

Il est également connu d'utiliser des polymères fonctionnels, notamment fonctionnels alcoxysilane, dans une composition de caoutchouc renforcée par une silice pour une bande de roulement d'un pneumatique, mais ces polymères sont des élastomères. Par exemple la demande de brevet WO2010116988 divulgue l'utilisation d'un copolymère élastomère portant une fonction alcoxysilane et contenant des unités vinylaromatiques pour améliorer le compromis entre la résistance à l'abrasion, la performance sur glace et le comportement sur route sèche du pneumatique. La demande de brevet JP 2000-344955 divulgue aussi l'utilisation de polydiènes élastomères, notamment polybutadiènes, fonctionnels alcoxysilane pour améliorer la résistance à l'abrasion, la résistance au roulement et l'adhérence sur sol mouillé d'un pneumatique.

Les inventeurs ont maintenant mis en évidence que des polymères thermoplastiques fonctionnalisés conféraient à la composition de caoutchouc les comprenant, un gradient de rigidité qui permet donc de satisfaire aux exigences contradictoires que sont le comportement routier et l'adhérence.

Ainsi, un objet de la présente invention est une composition de caoutchouc renforcée à base d'au moins un élastomère diénique, une charge non renforçante comprenant un polymère thermoplastique, une charge renforçante comprenant une charge inorganique renforçante, un agent de couplage assurant la liaison entre l'élastomère diénique et la charge inorganique renforçante, caractérisée en ce que le polymère thermoplastique présente une masse molaire moyenne en nombre, Mn, comprise entre 500 g/mol et 20000 g/mol, et porte en au moins une extrémité de chaîne une fonction spécifique choisie dans le groupe constitué par Si(OR¹)ₙR²₍₃₋ₙ₎, Si(OH)R¹₂ ou (SiR¹₂-O)ₚ-H, où :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone,
- R², identiques ou différents, représentent chacun un hydrogène ou un groupe hydrocarboné monovalent choisi parmi les alkyles, linéaires ou ramifiés, les cycloalkyles ou les aryles, ayant de 1 à 18 atomes de carbone, le groupement hydrocarboné portant ou non au moins une fonction choisie parmi une amine primaire, secondaire ou tertiaire, une imine ou un époxy,
- n représente un entier allant de 1 à 3
- p représente un entier allant de 2 à 30.

L'invention a également pour objet un pneumatique comprenant au moins un produit semi-fini en caoutchouc, préférentiellement une bande de roulement, constitué en tout ou partie de la composition de caoutchouc renforcée telle que définie plus haut. Un tel pneumatique présente un bon compromis de performance entre l'adhérence et le comportement routier.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.
Dans la présente description, sauf indication expresse différente, tous les pourcentages (%) indiqués sont des % en masse.
En ce qui concerne les taux de fonctions, un taux de fonction pour une fonction donnée exprimé en x% signifie que x chaînes sur 100 chaînes portent la fonction donnée. L'abréviation "pce" (en anglais "phr") signifie parties en poids pour cent parties d'élastomère ou caoutchouc (du total des élastomères si plusieurs élastomères sont présents).
D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Une caractéristique essentielle de la composition de caoutchouc conforme à l'invention est de comprendre au moins un élastomère diénique.

Par élastomère "diénique", doit être compris de manière connue un (on entend un ou plusieurs) élastomère constitué au moins en partie (i.e., un homopolymère ou un copolymère) d'unités issues de monomères diènes (monomères porteurs de deux doubles liaisons carbone-carbone, conjuguées ou non).

Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 à 99% en poids d'unités diéniques et de 1 à 80% en poids d'unités vinylaromatique.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Préférentiellement, l'élastomère diénique utilisé dans l'invention est choisi dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

La composition de caoutchouc conforme à l'invention peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères.

La composition de caoutchouc conforme à l'invention a pour autre caractéristique essentielle de comporter une charge non-renforçante comprenant un polymère thermoplastique fonctionnalisé.

On entend par polymère thermoplastique un polymère qui, sous l'action de la chaleur, fond ou se ramollit suffisamment pour pouvoir être mis en forme. Il est entendu que le polymère thermoplastique n'est pas réticulé.

Le polymère thermoplastique selon l'invention est caractérisé par une masse molaire moyenne en nombre, Mn, comprise entre 500 g/mol et 20000 g/mol et porte en au moins une extrémité de chaîne une fonction spécifique.

De telles caractéristiques du polymère thermoplastique dans une composition de caoutchouc renforcée par une charge inorganique confèrent à la composition de caoutchouc conforme à l'invention une aptitude à présenter un gradient de rigidité. Cette aptitude à présenter un gradient de rigidité est déterminée par l'amplitude de la chute du module de la composition de caoutchouc à faible déformation après accommodation. Plus la chute de module à faible déformation de la composition de caoutchouc est d'amplitude élevée sous l'effet de l'accommodation, meilleur est le compromis entre l'adhérence et le comportement routier du pneumatique comprenant une bande de roulement à base d'une telle composition de caoutchouc.

Selon un mode de réalisation préférentiel, le polymère thermoplastique est un polyvinylaromatique, c'est-à-dire un polymère constitué exclusivement d'unités vinylaromatiques.

Les monomères vinylaromatiques sont choisies dans le groupe constitué par le styrène et ses dérivés comme par exemple les styrènes dont le noyau benzénique est substitué par au moins un groupe choisi parmi les alkyles, les alkoxy, les dialkylamino ou les dialkylaminoalkyles. Préférentiellement les monomères sont le styrène et les alkylstyrènes substitués en ortho, méta et para comme par exemple le para méthylstyrène, le vinyltoluène et le tertiobutyl styrène.

Selon un mode de réalisation préférentiel, le taux de fonction portée en extrémité de chaîne du thermoplastique est d'au moins 80%, encore plus préférentiellement d'au moins 90%.

Lorsque la fonction spécifique portée en extrémité de chaîne du polymère thermoplastique est représentée par la formule générique Si(OR¹)ₙR²₍₃₋ₙ₎, avec R¹, R² et n tels que décrits plus haut, le polymère thermoplastique peut être préparé par polymérisation vivante, en particulier par polymérisation anionique. La fonction Si(OR¹)ₙR²₍₃₋ₙ₎ peut alors être apportée au cours de la synthèse du polymère thermoplastique par réaction de l'extrémité de chaîne vivante du polymère thermoplastique avec un agent de fonctionnalisation. Les agents de fonctionnalisation adéquats sont des alcoxysilanes, préférentiellement des dialcoxysilanes ou des trialcoxysilanes, comme par exemple le glycidoxypropyltriméthoxysilane, le glycidoxypropylméthyldiméthoxysilane, le tétraéthoxysilane, le méthyltriméthoxysilane, le diméthyldiméthoxysilane, l'isocyanatopropryltriéthoxysilane, le diméthylaminopropyltrimé-thoxysilane, le diméthylaminopropylméthyldiméthoxysilane, le N-(1,3-diméthylbutylidène)-3-(triéthoxysilyl)-1-propaneamine, le N-n-butyl-aza-2,2-diméthoxysilacyclopentane à titre d'exemples non limitatifs.

Lorsque la fonction spécifique est représentée par la formule générique Si(OH)R¹₂, avec R¹ ayant la même signification que ci-dessus, la fonctionnalisation avec un groupe silanol en extrémité de chaîne du polymère thermoplastique peut être réalisée au cours de la synthèse du polymère thermoplastique, par réaction de l'extrémité de chaîne vivante avec un polysiloxane cyclique comme l'hexaméthylcyclotrisiloxane selon le procédé décrit dans le brevet EP 0 778 311 B1 en adaptant le procédé au cas présent. L'hexaméthylcyclotrisiloxane peut être remplacé par un dialkyldihalosilane, comme le diméthyldichlorosilane ; dans ce dernier cas la réaction de fonctionnalisation est suivie d'une hydrolyse.

Lorsque la fonction spécifique est représentée par la formule générique (SiR¹₂-O)ₚ-H, avec R¹ et p ayant les mêmes significations que ci-dessus, la fonction en extrémité de chaîne du polymère thermoplastique est un bloc polysiloxane, auquel cas le polymère thermoplastique selon l'invention est un dibloc constitué d'un bloc polysiloxane et d'un bloc correspondant à la chaîne thermoplastique.
Un tel dibloc peut être synthétisé par exemple par réaction d'un polysiloxane α,ω-difonctionnel avec un polymère thermoplastique portant en extrémité de chaîne un site réactif. Une illustration de ce principe de synthèse est donnée dans la demande japonaise JP 3-137107 qui décrit une réaction d'hydrosilylation entre un ω-vinyl polystyrène et un α-hydrido, ω-silanol polysiloxane. Le dibloc peut être aussi synthétisé par réaction d'un polysiloxane cyclique, comme l'hexaméthylcyclotrisiloxane, en adaptant au cas présent le procédé décrit dans le brevet EP 0 778 311 B1 appliqué aux chaînes élastomères diéniques. La longueur du bloc polysiloxane est ajustée selon la longueur de la chaîne du polymère thermoplastique de manière à ce que le polymère thermoplastique portant en extrémité de chaîne le bloc polysiloxane, conserve son caractère thermoplastique sans acquérir des propriétés d'élastomère.

Selon un mode de réalisation préférentiel, le polymère thermoplastique selon l'invention porte une fonction silanol. Selon un mode davantage préférentiel, cette fonction est une fonction Si(OH)R₂, où R est un alkyle C1-C4, préférentiellement un méthyle.

Selon un mode de réalisation très préférentiel de l'invention, le polymère thermoplastique conforme à l'invention est un polyvinylaromatique, notamment un polystyrène, ayant en extrémité de chaîne une fonction silanol, et encore plus préférentiellement le groupement diméthylsilanol.

De tels polymères sont obtenus de manière connue en soi.

Un tel polymère thermoplastique issu d'unités vinylaromatiques et portant la fonction diméthylsilanol en extrémité de chaîne est par exemple synthétisé selon la séquence de réactions suivantes :
- polymérisation du styrène ou du dérivé styrénique ou de leur mélange par amorçage par un composé au lithium et
- réaction de la chaîne polymère vivante de nature styrénique avec l'hexaméthylcyclotrisiloxane avant d'introduire dans le milieu réactionnel un composé protique, comme par exemple un alcool ou un acide. A la place de l'hexaméthylcyclotrisiloxane, peut être utilisé un dihalogénosilane, comme le diméthyldichlorosilane, auquel cas la réaction est suivie d'une réaction hydrolyse.

Selon une autre caractéristique essentielle de l'invention, le polymère thermoplastique selon l'invention présente une masse molaire moyenne en nombre, Mn, comprise entre 500 g/mol et 20000 g/mol.

En deçà d'une Mn de 500 g/mol, l'hystérèse de la composition devient trop forte et pénalise la résistance au roulement. Pour une Mn supérieure ou égale à 20000 g/mol, l'amplitude de la chute du module à faible déformation après accommodation est faible pour créer un gradient de rigidité. Dans ces conditions, la composition reste rigide pour conférer de bonnes propriétés d'adhérence au pneumatique comprenant une bande de roulement comprenant une telle composition.
Selon un mode de réalisation préférentiel, le polymère thermoplastique présente une Mn allant de 1500 g/mol à 10000 g/mol, avantageusement de 2000 g/mol à 7000 g/mol. Dans ces plages préférentielles de Mn, la rigidité de la composition, exprimée par la mesure de la Shore, est élevée, et la chute du module à faible déformation après accommodation est de grande amplitude. Dans ces conditions préférentielles, un bon compromis entre l'adhérence et le comportement routier du pneumatique est atteint.

Selon un mode de réalisation particulier de l'invention, la charge non-renforçante peut comprendre plus d'un polymère thermoplastique selon l'invention, auquel cas les polymères thermoplastiques selon l'invention peuvent différer au moins par l'une des caractéristiques suivantes :
- la microstructure, comme par exemple par la nature des motifs monomères, leur proportion ou leur enchaînement ;
- la macrostructure, comme par exemple la longueur de la chaîne, la présence ou non de chaînes ramifiées, en particulier étoilées ;
- ou par la nature chimique de la fonction portée en extrémité de chaîne du polymère.

Selon un mode de réalisation préférentiel de l'invention, les chaînes du polymère thermoplastique sont linéaires, c'est-à-dire non ramifiées.

Selon un mode de réalisation particulier de l'invention, le polymère thermoplastique selon l'invention est utilisé dans une proportion allant de 3 à 30 pce. Un gradient de rigidité suffisant n'est obtenu qu'à partir de 3 pce de polymère thermoplastique. Au-delà de 30 pce, le gain en amplitude de chute de module à faible déformation après accommodation devient pénalisé par une forte augmentation de l'hystérèse de la composition de caoutchouc. Pour optimiser davantage le compromis de performance recherché pour le pneumatique que sont le comportement routier, l'adhérence et la résistance au roulement, le polymère thermoplastique selon l'invention est utilisé préférentiellement à hauteur de 5 à 20 pce, et encore plus préférentiellement de 8 à 15 pce.

Selon un mode de réalisation particulier de l'invention, la composition de caoutchouc peut contenir comme charge non-renforçante en plus du polymère thermoplastique selon l'invention, un polymère thermoplastique non-conforme à l'invention, du kaolin, de la craie ou de l'amidon à titre d'exemples. Le polymère thermoplastique non-conforme à l'invention peut être un polymère thermoplastique identique au polymère thermoplastique conforme à l'invention, si ce n'est qu'il ne porte pas en extrémité de chaîne une fonction conforme à l'invention. Avantageusement la charge non-renforçante est constituée majoritairement du polymère thermoplastique selon l'invention, c'est-à-dire que la fraction pondérale du polymère thermoplastique selon l'invention représente plus de 50% en poids de la charge non-renforçante, encore plus préférentiellement plus de 80% en poids de la charge non-renforçante.

Comme autre caractéristique essentielle de l'invention, la composition de caoutchouc conforme à l'invention comprend une charge renforçante comprenant une charge inorganique.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyles (-OH) à sa surface.

Préférentiellement la charge inorganique est une silice. La silice utilisée peut être toute silice renforçante connue de l'homme du métier.

A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles.

Selon un mode de réalisation préférentiel, la charge renforçante est majoritairement constituée d'une charge inorganique renforçante, c'est-à-dire que la proportion de charge inorganique renforçante est supérieure à 50% en poids du poids total de la charge renforçante.

On notera que la charge renforçante peut contenir, en plus de la ou des charges inorganiques renforçantes précitées, au moins une charge organique, telle que du noir de carbone. Cette charge organique renforçante est alors préférentiellement présente selon une fraction pondérale inférieure à 50 % par rapport au poids total de la charge renforçante.

Comme noirs de carbone conviennent tous les noirs de carbone, notamment les noirs du type HAF, ISAF, SAF, FF, FEF, GPF et SRF conventionnellement utilisés dans les compositions de caoutchouc pour pneumatiques (noirs dits de grade pneumatique).

Par exemple, les mélanges noir/ silice ou les noirs partiellement ou intégralement recouverts de silice conviennent pour constituer la charge renforçante. Conviennent également les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.

Comme exemples de charges organiques autres que des noirs de carbone, on peut citer les charges renforçantes organiques de polyvinylaromatique fonctionnalisé telles que décrites dans les demandes WO-A-2006/069792 et WO-A-2006/069793, ou encore les charges renforçantes organiques de polyvinyl non aromatique fonctionnalisé telles que décrites dans les demandes WO-A-2008/003434 et WO-A-2008/003435.

De manière préférentielle, le taux de charge renforçante est compris entre 30 et 200 pce, encore plus préférentiellement entre 40 et 120 pce.

Le noir de carbone, lorsqu'il est présent, est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

La composition de caoutchouc conforme à l'invention a aussi pour caractéristique essentielle de comprendre un agent de couplage.

Par agent de couplage, on entend plus précisément un agent apte à établir une liaison suffisante de nature chimique et/ou physique entre la charge inorganique renforçante et l'élastomère diénique, tout en facilitant la dispersion de cette charge au sein de la matrice élastomère. Un tel agent de liaison, au moins bifonctionnel, a par exemple comme formule générale simplifiée " Y-T-X' ", dans laquelle :
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (-OH) de surface de la charge inorganique (par exemple les silanols de surface lorsqu'il s'agit de silice);
- X' représente un groupe fonctionnel (fonction " X' ") capable de se lier physiquement et/ou chimiquement à l'élastomère, par exemple par l'intermédiaire d'un atome de soufre;
- T représente un groupe divalent permettant de relier Y et X'.

De manière préférentielle, l'agent de couplage est un silane, encore plus préférentiellement un silane polysulfuré.

Dans les compositions de caoutchouc conformes à l'invention, le taux d'agent de couplage est avantageusement inférieur à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

A titre de charge équivalente de la charge inorganique renforçante décrite dans le présent paragraphe, peut être utilisée une charge renforçante d'une autre nature, notamment organique, dès lors que cette charge renforçante est recouverte d'une couche inorganique telle que silice, ou bien comporte à sa surface des sites fonctionnels, notamment hydroxyles, nécessitant l'utilisation d'un agent de couplage pour établir la liaison entre cette charge renforçante et l'élastomère diénique.

Les compositions de caoutchouc conformes à l'invention peuvent également contenir des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent comporter également tout ou partie des additifs usuels habituellement utilisés dans les compositions de caoutchouc destinées à la fabrication de pneumatiques, comme par exemple des pigments, des agents de protection tels que cires anti-ozone, anti-ozonants chimiques, anti-oxydants, des agents anti-fatigue, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation, des promoteurs d'adhésion tels que des composés à base de cobalt, des agents plastifiants, préférentiellement non aromatiques ou très faiblement aromatiques choisis dans le groupe constitué par les huiles naphténiques, paraffniques, huiles MES, huiles TDAE, les plastifiants éthers, les plastifiants esters (par exemple les trioléates de glycérol), les résines hydrocarbonées présentant une haute Tg, de préférence supérieure à 30 °C, telles que décrites par exemple dans les demandes WO 2005/087859, WO 2006/061064 et WO 2007/017060, et les mélanges de tels composés.

La composition de caoutchouc selon l'invention est fabriquée de manière connue en soi dans des mélangeurs appropriés.

En raison de ses propriétés de gradient de rigidité, la composition de caoutchouc conforme à l'invention est tout à fait appropriée pour former un semi-fini, préférentiellement une bande de roulement pour pneumatique. Un tel pneumatique présente un bon compromis de performance entre l'adhérence et le comportement routier et constitue un objet de l'invention.

Les caractéristiques précitées de la présente invention, ainsi que d'autres, seront mieux comprises à la lecture de la description suivante de plusieurs exemples de réalisation de l'invention, donnés à titre illustratif et non limitatif.

### EXEMPLES DE REALISATION DE L'INVENTION :

a) La viscosité Mooney ML (1+4) à 100° C est mesurée selon la norme ASTM D-1646 avec un consistomètre oscillant. La mesure de la viscosité Mooney se fait selon le principe suivant : l'échantillon analysé à l'état cru (i.e., avant cuisson) est moulé (mis en forme) dans une enceinte cylindrique chauffée à une température donnée (par exemple 35°C ou 100°C). Après une minute de préchauffage, le rotor tourne au sein de l'éprouvette à 2 tours/minute et on mesure le couple utile pour entretenir ce mouvement après 4 minutes de rotation. Elle est exprimée en base 100 par rapport à la viscosité Mooney de la composition témoin. Une valeur inférieure à 100 indique une viscosité Mooney de la composition considérée plus faible que celle de la composition témoin, ce qui témoigne d'une amélioration de la mise en oeuvre de la composition en comparaison à la composition témoin.
(b) La dureté SHORE A est mesurée selon la norme DIN 53505. Elle est exprimée en base 100 par rapport à la dureté Shore de la composition témoin. Une valeur supérieure à 100 traduit une amélioration du comportement routier du pneumatique.
(c) Les modules d'allongement à 300 % (MA300), à 100 % (MA100), à 10 % (MA10), sont mesurés sur éprouvette initiale selon la norme ISO 37 à 23°C. On mesure également les modules sécants nominaux à 10% d'allongement après une accommodation à 50% ou à 100% (i.e. une extension de 50% ou 100% respectivement suivie d'un relâchement à 0%). Ces modules accommodés sont notés MA10Ac(50%) ou MA10Ac(100%) respectivement. Les modules sont exprimés en base 100 par rapport aux modules correspondants de la composition témoin. Une valeur inférieure à 100 indique un module de la composition considérée inférieur à celui de la composition témoin.
   L'amplitude de la chute du module MA10 après accommodation jusqu'à 50% ou 100% de déformation est calculée respectivement par la relation 100x(1-MA10Ac(50%)/MA10) ou 100x(1-MA10Ac(100%)/MA10). Cette amplitude est exprimée en pourcentage. Plus cette amplitude est élevée par rapport à la composition témoin, plus l'aptitude de la composition à présenter un gradient de rigidité est élevée, meilleur est le compromis entre l'adhérence et le comportement routier du pneumatique.
   L'indice de renforcement qui est le rapport du module MA300 sur le module MA100, est exprimé en base 100 par rapport à la composition témoin. Une valeur supérieure à 100 traduit une amélioration du renforcement de la composition considérée par rapport à la composition témoin.
(d) Les propriétés dynamiques tan(δ)ₘₐₓ sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10 Hz, dans les conditions normales de température (60°C) selon la norme ASTM D 1349-99. On effectue un balayage en amplitude de déformation crête-crête de 0,1 à 50% (cycle aller), puis de 50% à 0,1% (cycle retour). Le résultat exploité est le facteur de perte tan (δ). Pour le cycle retour, on indique la valeur maximale de tan (δ) observée (tan(δ)max).
   Le facteur de perte est exprimé en base 100 par rapport au facteur de perte de la composition témoin. Une valeur supérieure à 100 témoigne d'une hystérèse plus élevée de la composition considérée.
   Sur le même appareillage, on enregistre la réponse d'un échantillon de composition vulcanisée (éprouvette cylindrique de 2 mm d'épaisseur et de 79 mm² de section), à une contrainte donnée, à la fréquence de 10 Hz, dans des conditions de températures variables. Le résultat exploité est le facteur de perte tan (δ) à 0°C. Le facteur de perte est exprimé en base 100 par rapport au facteur de perte de la composition témoin. Une valeur supérieure à 100 témoigne d'une hystérèse plus élevée de la composition considérée, traduisant une meilleure efficacité de la composition en adhérence.
(e) La masse molaire moyenne en nombre et l'indice de polymolécularité sont déterminés par analyse SEC ("*Size Exclusion Chromatography")*.
   Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, par exemple tétrahydrofuranne à une concentration de 1 g/litre. Puis la solution est filtrée sur un filtre, par exemple de porosité 0,45 µm, avant injection dans l'appareillage. L'appareillage utilisé est par exemple une chaîne chromatographique "Waters alliance". Le solvant d'élution est par exemple le tétrahydrofuranne, le débit est de 0,7 ml/min, la température du système est de 35°C. On utilise par exemple un jeu de 4 colonnes "Waters" en série (dénominations "Styragel HMW7", " Styragel HMW6E", et deux " Styragel HT6E"). Le volume injecté de la solution de l'échantillon de polymère est par exemple de 100 µl. Le détecteur est un réfractomètre différentiel (par exemple "Waters 2410") pouvant être équipé d'un logiciel associé d'exploitation des données (par exemple "Waters Millenium"). Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn).
(f) Le taux de fonction est calculé à partir de l'analyse de RMN (« *Résonance Magnétique Nucléaire* ») et suite à la détermination de la masse molaire moyenne en nombre.
   Avant d'être analysés, les échantillons subissent :
   - trois cycles de dissolution dans le toluène et coagulation dans le méthanol pour éliminer toute trace d'agent de fonctionnalisation résiduel, c'est-à-dire non lié au polymère,
   - puis un séchage en étuve sous courant d'azote à 40°C pour éliminer toute trace de solvant résiduel.
   Les analyses RMN sont réalisées sur un spectromètre 500 MHz BRUKER équipé d'une sonde " large bande " BBIz 5 mm. Pour l'expérience RMN ¹H quantitative, la séquence utilise une impulsion 30° et un délai de répétition de 2 secondes. Les échantillons sont solubilisés dans le sulfure de carbone (CS₂). 100 mL de cyclohexane deutéré (C₆D₁₂) sont ajoutés pour le signal de lock. Le spectre RMN ¹H permet de quantifier la fonction (CH₃)₂Si par intégration du signal caractéristique des protons SiCH₃ autour du déplacement chimique δ = 0 ppm. L'analyse de RMN permet d'accéder au taux de fonctionnalisation des chaînes polymère en méq/kg. Ce taux est converti par calcul en un pourcentage de fonctionnalisation en tenant compte de la Mn déterminée selon la méthode décrite au (e).

### Préparation des polymères thermoplastiques :

Le toluène, le méthanol et le styrène sont au préalable barbotés à l'azote.
Les réactions sont conduites en bouteille ou en réacteur sous pression d'azote. Une fois les solvants et les réactifs introduits, les bouteilles sont agitées dans un bain maintenu à une température donnée et régulée. Les températures consignées sont celles du bain dans le cas d'une polymérisation conduite en bouteille et sont celles du milieu réactionnel dans le cas d'une polymérisation conduite en réacteur.

### Polystyrène fonctionnel diméthylsilanol de Mn 2500 g/mol :

Dans une bouteille contenant 150 ml de toluène barboté à l'azote, sont introduits 0.60 ml d'une solution de tétrahydrofurane à 2.0 mol/l dans le toluène, et 14 ml de styrène. A cette solution refroidie à 0°C, 3.70 ml d'une solution de sBuLi à 1.37 mol/l sont injectés. Après 20 minutes de polymérisation à 0°C, 4.9 ml d'une solution d'hexaméthylcyclotrisiloxane dans le toluène à 0.5 mol/ l sont introduits. Après 30 minutes de réaction à 60°C, 0.5 ml de méthanol sont ajoutés. Après addition de 0.80 pce de 2,2-méthylène bis(4-méthyl-6-tertiobutylphénol) et 0.40 pce de N-(1,3-diméthylbutyl)-N-phényl-p-phénylènediamine, la solution de polymère est lavée à l'eau jusqu'à neutralité. Le polymère est récupéré sec après séchage en étuve sous pression réduite à 60°C sous azote.
Le polymère résultant est caractérisé par une Mn 2500 g/mol, un Ip de 1.16 et un taux de fonction de l'ordre de 100%.

### Polystyrène fonctionnel diméthylsilanol de Mn 10000 g/mol :

Dans une bouteille contenant 150 ml de toluène barboté à l'azote sont introduits 0.60 ml d'une solution de tétrahydrofurane à 2 mol/l dans le toluène, et 14 ml de styrène. A cette solution refroidie à 0°C, 0.93 ml d'une solution de sBuLi à 1.37 mol/l sont injectés. La polymérisation est conduite à 0°C. A une conversion proche de 100%, 1.27 ml d'une solution d'hexaméthylcyclotrisiloxane à 0.5 mol/ l dans le toluène sont introduits. La réaction est conduite à 60°C. Après décoloration complète du milieu réactionnel chauffé à 60°C, 0.5 ml de méthanol sont ajoutés. Après addition de 0.40 pce de 2,2-méthylène bis(4-méthyl-6-tertiobutylphénol) et 0.20 pce de N-(1,3-diméthylbutyl)-N-phényl-p-phénylènediamine, la solution de polymère est lavée à l'eau jusqu'à neutralité. Le polymère est récupéré sec après séchage en étuve sous pression réduite à 60°C sous azote.
Le polymère résultant est caractérisé par une Mn 10000 g/mol, un Ip de 1.10 et un taux de fonction de l'ordre de 100%.

### Polystyrène fonctionnel diméthylsilanol de Mn 6500 g/mol :

Dans un réacteur contenant 65 litres de toluène barboté à l'azote sont introduits 2.4 litres d'une solution de tétrahydrofurane à 0.4 mol/l dans le toluène et 6.5 litres de styrène. A cette solution refroidie à -2°C, 0.83 litre d'une solution de sBuLi concentrée est injecté rapidement. A 98% de conversion, 1 litre d'une solution d'hexaméthylcyclotrisiloxane à 0.47 mol/ l dans le toluène est introduit et le milieu réactionnel est porté à 60°C. Après 30 minutes de réaction à 60°C, 1 litre d'une solution de méthanol à 2.4 mol/l dans le toluène est ajouté. 5 minutes après, la solution de polymère est lavée à l'eau jusqu'à neutralité. Ensuite est ajouté 1.1 litre d'une solution à 50g/l dans le toluène d'un mélange d'antioxydants comprenant respectivement 80% et 20% en masse de 2,2-méthylène bis(4-méthyl-6-tertiobutylphénol) et de N-1,3-diméthylbutyl-N-phénylparaphénylènediamine. Le polymère est récupéré sec après séchage en étuve sous pression réduite à 60°C sous azote.
Le polymère résultant est caractérisé par une Mn 6500 g/mol, un Ip de 1.07 et un taux de fonction de l'ordre de 100%.

### Préparation des compositions de caoutchouc :

Pour préparer les compositions A, B, et C-K dont la formulation est décrite dans les tableaux qui suivent, on procède de la manière suivante : on introduit successivement, dans un mélangeur interne de laboratoire de type "Banbury', dont la capacité est de 400 cm3, qui est rempli à 75% et dont la température initiale est d'environ 85°C :
- les élastomères, l'huile, la silice, le noir, l'agent de couplage, l'antioxydant, l'acide stéarique, la DPG, l'oxyde de zinc,
- pour la composition B aussi l'accepteur de méthylène
- pour les compositions C-K aussi les polystyrènes fonctionnels.

On conduit l'étape de travail thermo-mécanique pendant environ 3 à 4 minutes, jusqu'à une température de tombée de l'ordre de 160°C environ.

Le premier temps précité de travail thermo-mécanique est ainsi réalisé, étant précisé que la vitesse moyenne des palettes lors de ce premier temps est de 75 tours/min.

On récupère le mélange ainsi obtenu, on le refroidit puis, dans un mélangeur externe (homo-finisseur), on ajoute le soufre, la sulfénamide, et le donneur de méthylène dans le cas précis de la composition B, à 30°C, en mélangeant encore le tout pendant une durée de 3 à 4 minutes.

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Dans cet essai, on compare 11 compositions de caoutchouc, à base d'élastomères diéniques, renforcées par de la silice. Les compositions notées A et B sont respectivement les compositions témoin et de référence pour cet essai. Les compositions C-K sont toutes conformes à l'invention : elles contiennent toutes un polystyrène fonctionnel silanol. La masse molaire moyenne en nombre du polystyrène fonctionnel est de 2500 g/mol, 6500 g/mol ou 10000 g/mol et le taux de polystyrène fonctionnel dans la composition est de 8, 10 ou 15 pce. La formulation de ces compositions est consignée dans le tableau I suivant.

**Tableau I**

| **Compositions** | **A témoin** | **B référence** | **C, F, I invention** | **D, G, J invention** | **E, H, K invention** |
|---|---|---|---|---|---|
| Elastomère diénique (1) | 82.5 | 82.5 | 82.5 | 82.5 | 82.5 |
| Elastomère diénique (2) | 40 | 40 | 40 | 40 | 40 |
| Charge (3) | 80 | 80 | 80 | 80 | 80 |
| Agent de couplage (4) | 6,4 | 6,4 | 6,4 | 6,4 | 6,4 |
| Charge (5) | 6 | 6 | 6 | 6 | 6 |
| Huile (6) | 9 | 9 | 9 | 9 | 9 |
| DPG (7) | 1,5 | 1,5 | 1,5 | 1,5 | 1,5 |
| Anti-oxydant (8) | 1,9 | 1,9 | 1,9 | 1,9 | 1,9 |
| Acide stéarique | 2 | 2 | 2 | 2 | 2 |
| ZnO | 2,5 | 2,5 | 2,5 | 2,5 | 2,5 |

| **Accepteur de méthylène (9)** | | **5** | | | |
|---|---|---|---|---|---|
| **PS-SiOH (10)** | | | **8** | **10** | **15** |
| Sulfénamide (11) | 1,2 | 1,2 | 1,2 | 1,2 | 1,2 |
| Soufre | 1,2 | 1,2 | 1,2 | 1,2 | 1,2 |
| **Donneur de méthylène (12)** | | **3** | | | |

| | | | | | |
|---|---|---|---|---|---|
| (1) = SBR (57% motif vinyl de la partie butadiénique, 26% motif styrène, étendu à 37.5 pce d'huile aromatique) (2) = BR (93% motif 1,4-cis) (3) = Silice 160MP de la société Rhodia (4) = TESPT de la société Degussa (5) = Noir de carbone N234 (6) = Huile aromatique « Enerflex 65 » de la société BP (7) = Diphécrylguanidine de la société Flexsys (8) = N-(1,3-diméthylbutyl)-N'-phényl-p-phénylènediamine, de la société Flexsys (9) = Résine formophénol (10)= Polystyrène fonctionnel SiOH de masse molaire variable selon tableau II (11) = N,N-dicyclohexyl-2-benzothiazylsulfénamide (12) = HMT de la société Degussa | | | | | |

**Tableau II**

| **PS-SiOH** | Mn 2500 g/mol | Mn 6500 g/mol | Mn 10000 g/mol |
|---|---|---|---|
| **Composition** | **C, D, E** | **F, G, H** | **I, J, K** |

### Résultats :

Les résultats des essais figurent dans les tableaux III, et IV.

La composition de référence B connue de l'état de la technique, en particulier de la publication de la demande WO02/10269, pour donner un gradient de rigidité est caractérisée :
- par une amplitude de la chute du module MA10 après accommodation de 89% qui est très supérieure à celle de la composition témoin (68%) connue pour ne pas donner de gradient de rigidité en pneumatique selon le WO02/10269,
- par une dureté Shore de 117 très supérieure à la valeur témoin, ce qui démontre une amélioration du comportement routier par rapport à la composition témoin,
- par un tan (δ) à 0°C supérieur à la référence, traduisant une amélioration de performance adhérence.

Les compositions C-K sont caractérisées :
- toutes par une amplitude de la chute du module MA10 après accommodation supérieure à celle du témoin A, même certaines de ces compositions comme C, D, E, G et H présentent une amplitude de la chute du module MA10 à la fois très supérieure au témoin et comparable à la référence B,
- pour toutes par une dureté Shore supérieure à celle du témoin A.
- pour la plupart d'entre elles par un tan (δ) à 0°C supérieur à la référence.

Au regard de ces caractéristiques, toutes ces compositions présentent un gradient de rigidité qui traduit une amélioration du compromis de performance entre l'adhérence et le comportement routier du pneumatique. Cette amélioration est particulièrement très marquée :
- pour les compositions C, D, E qui comportent un mélange de polystyrène fonctionnel diméthylsilanol de Mn 2500 g/mol à des taux allant de 8 à 15 pce,
- pour les compositions G et H qui comportent un polystyrène fonctionnel diméthylsilanol de Mn 6500 g/mol à des taux allant de 8 à 15 pce.

Par ailleurs toutes les compositions conformes à l'invention sont caractérisées par une valeur ML très inférieure à celle du témoin A, voire celle de la référence B, ce qui traduit une amélioration de la mise en oeuvre de la composition.

**Tableau III**

| Composition | **A témoin** | **B référence** | **C invention** | **D invention** | **E invention** |
|---|---|---|---|---|---|
| ML(1+4) à 100°C | 100 | 85 | 76 | 75 | 69 |
| Shore A à 23°C | 100 | 117 | 107 | 116 | 116 |
| tan(δ) ₘₐₓ à 23 °C | 100 | 107 | 141 | 151 | 161 |
| tan(δ) à 0°C | 100 | 96 | 116 | 114 | 99 |
| MA10 | 100 | 187 | 119 | 133 | 165 |
| MA10 Ac(100%) | 100 | 63 | 32 | 34 | 36 |
| chute du MA10 après accommodation (%) | 68 | 89 | 85 | 89 | 98 |
| MA300/MA100 | 100 | 89 | 89 | 86 | 77 |

**Tableau IV**

| Composition | **F invention** | **G invention** | **H invention** | **I invention** | **J invention** | **K invention** |
|---|---|---|---|---|---|---|
| ML(1+4) à 100°C | 84 | 82 | 77 | 89 | 88 | 85 |
| Shore A à 23°C | 103 | 107 | 113 | 101 | 103 | 105 |
| tan(δ) ₘₐₓ à 23°C | 127 | 134 | 145 | 109 | 110 | 114 |
| tan(δ) à 0°C | 113 | 114 | 111 | 104 | 105 | 104 |
| MA10 | 116 | 133 | 159 | 119 | 120 | 131 |
| MA10 Ac(100%) | 78 | 81 | 38 | 102 | 95 | 88 |
| chute du MA 10 après accommodation (%) | 79 | 81 | 93 | 72 | 74 | 79 |
| MA300/MA100 | 94 | 90 | 83 | 96 | 96 | 92 |

## Revendications

1. Composition de caoutchouc renforcée à base d'au moins :
- un élastomère diénique,
- une charge non renforçante comprenant 3 à 30 pce d'un polymère thermoplastique
- une charge renforçante comprenant une charge inorganique renforçante,
- un agent de couplage assurant la liaison entre l'élastomère diénique et la charge inorganique renforçante,
**caractérisée en ce que** le polymère thermoplastique présente une masse molaire moyenne en nombre, Mn, comprise entre 500. g/mol et 20000 g/mol, et porte en au moins une extrémité de chaîne une fonction spécifique choisie dans le groupe constitué par Si(OR¹)ₙR²₍₃₋ₙ₎, Si(OH)R¹₂ ou (SiR¹₂-O)ₚ-H, où :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone,
- R², identiques ou différents, représentent chacun un hydrogène ou un groupe hydrocarboné monovalent choisi parmi les alkyles, linéaires ou ramifiés, les cycloalkyles ou les aryles, ayant de 1 à 18 atomes de carbone, le groupement hydrocarboné portant ou non au moins une fonction choisie parmi une amine primaire, secondaire ou tertiaire, une imine et un époxy,
- n représente un entier allant de 1 à 3
- p représente un entier allant de 2 à 30.

2. Composition de caoutchouc selon la revendication 1, **caractérisée en ce que** la masse molaire moyenne en nombre du polymère thermoplastique varie de 1500 g/mol à 10000 g/mol.

3. Composition de caoutchouc selon la revendication 2, **caractérisée en ce que** la masse molaire moyenne en nombre du polymère thermoplastique varie de 2000 g/mol à 7000 g/mol.

4. Composition de caoutchouc selon l'une quelconque des revendications 1 à 3, **caractérisée en ce que** le polymère thermoplastique est présent dans une proportion allant de 5 à 20 pce, plus préférentiellement de 8 à 15 pce.

5. Composition de caoutchouc selon l'une quelconque des revendications 1 à 4, **caractérisée en ce que** le polymère thermoplastique contient exclusivement des unités vinylaromatiques.

6. Composition de caoutchouc selon la revendication 5, **caractérisée en ce que** les unités vinylaromatiques sont issues du styrène, d'un dérivé du styrène ou leur mélange.

7. Composition de caoutchouc selon la revendication 6, **caractérisée en ce que** le dérivé du styrène est un alkylstyrène substitué en para, ortho ou méta.

8. Composition de caoutchouc selon l'une quelconque des revendications 1 à 7, **caractérisée en ce que** le polymère thermoplastique présente en au moins une extrémité de chaîne une fonction SiR₂OH, où R est un alkyle en C1-C4, préférentiellement un méthyle.

9. Composition de caoutchouc selon l'une quelconque des revendications 1 à 8, **caractérisée en ce que** la charge renforçante est constituée majoritairement d'une charge inorganique renforçante.

10. Composition de caoutchouc selon l'une quelconque des revendications 1 à 9, **caractérisée en ce que** la charge inorganique renforçante est une silice.

11. Composition de caoutchouc selon l'une quelconque des revendications 1 à 10, **caractérisée en ce que** l'élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

12. Pneumatique comportant au moins une bande de roulement comprenant une composition de caoutchouc selon l'une quelconque des revendications 1 à 11.

## Patentansprüche

1. Verstärkte Kautschukzusammensetzung auf Basis von mindestens:
- einem Dienelastomer,
- einem nicht verstärkenden Füllstoff, der 3 bis 30 phe eines thermoplastischen Polymers umfasst,
- einem verstärkenden Füllstoff, der einen verstärkenden anorganischen Füllstoff umfasst,
- einem Kupplungsmittel, das die Bindung zwischen dem Dienelastomer und dem verstärkenden anorganischen Füllstoff gewährleistet,
**dadurch gekennzeichnet, dass** das thermoplastische Polymer eine zahlenmittlere Molmasse Mn zwischen 500 g/mol und 20.000 g/mol aufweist und an mindestens einem Kettenende eine spezifische Funktion aus der Gruppe bestehend aus Si (OR¹)ₙR²₍₃₋ₙ₎, Si (OH) R¹₂ oder (SiR¹₂-O)ₚ-H trägt, wobei:
- die Reste R¹ gleich oder verschieden sind und jeweils für eine einwertige Kohlenwasserstoffgruppe, die aus linearen oder verzweigten Alkylgruppen, Cycloalkylgruppen oder Arylgruppen mit 1 bis 18 Kohlenstoffatomen ausgewählt ist, stehen,
- die Reste R² gleich oder verschieden sind und jeweils für Wasserstoff oder eine einwertige Kohlenwasserstoffgruppe, die aus linearen oder verzweigten Alkylgruppen, Cycloalkylgruppen oder Arylgruppen mit 1 bis 18 Kohlenstoffatomen ausgewählt ist, stehen, wobei die Kohlenwasserstoffgruppe gegebenenfalls mindestens eine aus einem primären, sekundären oder tertiären Amin, einem Imin und einem Epoxid ausgewählte Funktion trägt,
- n für eine ganze Zahl im Bereich von 1 bis 3 steht,
- p für eine ganze Zahl im Bereich von 2 bis 30 steht.

2. Kautschukzusammensetzung nach Anspruch 1, **dadurch gekennzeichnet, dass** die zahlenmittlere Molmasse des thermoplastischen Polymers von 1500 g/mol bis 10.000 g/mol variiert.

3. Kautschukzusammensetzung nach Anspruch 2, **dadurch gekennzeichnet, dass** die zahlenmittlere Molmasse des thermoplastischen Polymers von 2000 g/mol bis 7000 g/mol variiert.

4. Kautschukzusammensetzung nach einem der Ansprüche 1 bis 3, **dadurch gekennzeichnet, dass** das thermoplastische Polymer in einem Bereich von 5 bis 20 phe, weiter bevorzugt 8 bis 15 phe, vorliegt.

5. Kautschukzusammensetzung nach einem der Ansprüche 1 bis 4, **dadurch gekennzeichnet, dass** das thermoplastische Polymer ausschließlich vinylaromatische Einheiten umfasst.

6. Kautschukzusammensetzung nach Anspruch 5, **dadurch gekennzeichnet, dass** sich die vinylaromatischen Einheiten von Styrol, einem Styrolderivat oder einer Mischung davon ableiten.

7. Kautschukzusammensetzung nach Anspruch 6, **dadurch gekennzeichnet, dass** es sich bei dem Styrolderivat um ein para-, ortho- oder meta-substituiertes Alkylstyrol handelt.

8. Kautschukzusammensetzung nach einem der Ansprüche 1 bis 7, **dadurch gekennzeichnet, dass** das thermoplastische Polymer an mindestens einem Kettenende eine SiR₂OH-Funktion aufweist, wobei R für ein C1-C4-Alkyl, vorzugsweise ein Methyl, steht.

9. Kautschukzusammensetzung nach einem der Ansprüche 1 bis 8, **dadurch gekennzeichnet, dass** der verstärkende Füllstoff hauptsächlich aus einem verstärkenden anorganischen Füllstoff besteht.

10. Kautschukzusammensetzung nach einem der Ansprüche 1 bis 9, **dadurch gekennzeichnet, dass** es sich bei dem verstärkenden anorganischen Füllstoff um eine Kieselsäure handelt.

11. Kautschukzusammensetzung nach einem der Ansprüche 1 bis 10, **dadurch gekennzeichnet, dass** das Dienelastomer aus der Gruppe bestehend aus Polybutadien, Naturkautschuk, synthetischen Polyisoprenen, Butadien-Copolymeren, Isopren-Copolymeren und Mischungen dieser Elastomere ausgewählt ist.

12. Reifen mit mindestens einer Lauffläche, umfassend eine Kautschukzusammensetzung nach einem der Ansprüche 1 bis 11.

## Claims

1. Reinforced rubber composition based on at least:
- a diene elastomer,
- a non-reinforcing filler comprising from 3 to 30 phr of a thermoplastic polymer,
- a reinforcing filler comprising a reinforcing inorganic filler,
- a coupling agent providing the bond between the diene elastomer and the reinforcing inorganic filler,
**characterized in that** the thermoplastic polymer has a number-average molar mass, Mn, between 500 g/mol and 20 000 g/mol, and bears, at at least one chain end, a specific functional group selected from the group consisting of Si(OR¹)ₙR²₍₃₋ₙ₎, Si(OH)R¹₂ or (SiR¹₂-O)ₚ-H, where:
- R¹, which are identical or different, each represent a monovalent hydrocarbon-based group selected from alkyls, which are linear or branched, cycloalkyls or aryls, having from 1 to 18 carbon atoms,
- R², which are identical or different, each represent a hydrogen or a monovalent hydrocarbon-based group selected from alkyls, which are linear or branched, cycloalkyls or aryls, having from 1 to 18 carbon atoms, the hydrocarbon-based group optionally bearing at least one functional group selected from a primary, secondary or tertiary amine, an imine and an epoxy,
- n represents an integer ranging from 1 to 3,
- p represents an integer ranging from 2 to 30.

2. Rubber composition according to Claim 1, **characterized in that** the number-average molar mass of the thermoplastic polymer varies from 1500 g/mol to 10 000 g/mol.

3. Rubber composition according to Claim 2, **characterized in that** the number-average molar mass of the thermoplastic polymer varies from 2000 g/mol to 7000 g/mol.

4. Rubber composition according to any one of Claims 1 to 3, **characterized in that** the thermoplastic polymer is present in a proportion ranging from 5 to 20 phr, more preferably from 8 to 15 phr.

5. Rubber composition according to any one of Claims 1 to 4, **characterized in that** the thermoplastic polymer contains exclusively vinylaromatic units.

6. Rubber composition according to Claim 5, **characterized in that** the vinylaromatic units are derived from styrene, a styrene derivative, or a mixture thereof.

7. Rubber composition according to Claim 6, **characterized in that** the styrene derivative is a *para*-, *ortho*- or *meta*-substituted alkylstyrene.

8. Rubber composition according to any one of Claims 1 to 7, **characterized in that** the thermoplastic polymer has, at at least one chain end, an SiR₂OH functional group, where R is a C₁-C₄ alkyl, preferably a methyl.

9. Rubber composition according to any one of Claims 1 to 8, **characterized in that** the reinforcing filler consists predominantly of a reinforcing inorganic filler.

10. Rubber composition according to any one of Claims 1 to 9, **characterized in that** the reinforcing inorganic filler is a silica.

11. Rubber composition according to any one of Claims 1 to 10, **characterized in that** the diene elastomer is selected from the group consisting of polybutadienes, natural rubber, synthetic polyisoprenes, butadiene copolymers, isoprene copolymers and blends of these elastomers.

12. Tyre comprising at least one tread comprising a rubber composition according to any one of Claims 1 to 11.
